(19) Europäisches Patentamt / European Patent Office / Office européen des brevets

(11) **EP 2 082 939 B1**

(12) **FASCICULE DE BREVET EUROPEEN**

(45) Date de publication et mention de la délivrance du brevet:
**03.08.2011 Bulletin 2011/31**

(51) Int Cl.:
***B60W 40/06*** *(2006.01)*

(21) Numéro de dépôt: **09150903.4**

(22) Date de dépôt: **20.01.2009**

(54) **Procédé et système d'estimation d'adhérence dans un véhicule automobile**

Verfahren und System zur Abschätzung der Haftung in einem Kraftfahrzeug

Method and system for estimating grip in an automobile

(84) Etats contractants désignés:
**DE FR GB**

(30) Priorité: **22.01.2008 FR 0850386**

(43) Date de publication de la demande:
**29.07.2009 Bulletin 2009/31**

(73) Titulaire: **PEUGEOT CITROËN AUTOMOBILES S.A.**
**78140 Vélizy Villacoublay (FR)**

(72) Inventeurs:
• **Pengov, Marco**
**92500, RUEIL MALMAISON (FR)**
• **D'Andrea Novel, Brigitte**
**75013, PARIS (FR)**
• **Boussard, Clément**
**75001, PARIS (FR)**

(56) Documents cités:
**EP-A- 1 510 427       DE-A1- 3 743 471**
**DE-A1- 10 208 815     DE-A1- 19 603 677**
**US-A1- 2002 105 297**

**Description**

La présente invention se situe dans le domaine de l'automobile, et notamment dans le domaine de l'estimation des conditions de roulage d'un véhicule.

De manière plus précise, l'invention se situe dans le domaine de l'estimation embarquée de conditions de risques, notamment

- les risques dus à des facteurs climatologiques tels que la pluie, la neige ou le brouillard,
- les risques liés à l'état de la chaussée ou à la présence d'obstacles tels qu'une flaque d'huile, des feuilles mortes, de l'herbe coupée, et
- les risques liés à l'état d'usure des pneus du véhicule.

L'apparition de l'un ou l'autre de ces risques peut avoir des conséquences sur les conditions de roulage telles que l'adhérence ou la distance de visibilité offerte au conducteur. Il est donc utile, afin de garantir une meilleure sécurité au véhicule, à ses occupants et à son environnement, de pouvoir détecter les changements de conditions, afin d'en tenir compte dans la conduite du véhicule.

On a constaté que ces changements de conditions peuvent être extrêmement localisés, notamment dans le cas d'un obstacle sur la chaussée, mais également dans le cas des risques climatiques puisque, par exemple, il est possible que seule une partie de la chaussée soit verglacée, ou qu'une nappe de brouillard s'étende sur seulement quelques mètres. En conséquence, la seule connaissance des conditions météorologiques ne suffit pas à déterminer de façon précise la localisation de ces conditions de risque, ni leur influence exacte.

On connaît des méthodes pour déterminer en temps réel les conditions de visibilité d'un conducteur et en déduire une estimation de la distance de visibilité, à partir d'une caméra embarquée. L'invention vise à fournir un procédé similaire pour effectuer une estimation de l'adhérence d'un véhicule sur la chaussée, quelles que soient les conditions climatiques environnantes.

Une telle connaissance est très importante dans le cadre du développement de nouveaux systèmes de sécurité pour véhicules automobiles, puisque, comme présenté dans le document US2002/105297, à partir de l'adhérence, il est possible de déterminer une distance minimum de freinage d'un véhicule, permettant de déterminer une distance de sécurité minimale à respecter entre deux véhicules.

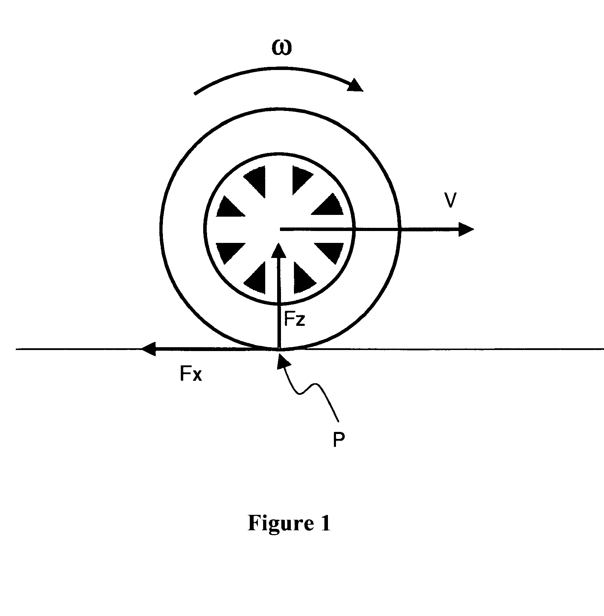

Afin de pouvoir estimer une telle adhérence, il est utile, dans un premier temps, de considérer les différentes forces mécaniques s'appliquant sur une roue de véhicule. Ce bilan de forces est effectué en se référant à la figure 1, qui montre les différentes forces s'appliquant sur une roue de véhicule.

Sur cette figure, w représente la vitesse angulaire de la roue représentée, V représente la vitesse du véhicule, et P désigne le point de contact entre la roue et la route.

La force $F_x$ est une force de résistance, ou force de friction, longitudinale qui s'applique au niveau du point de contact de la roue et du sol. $F_z$ est la force normale de réaction du sol en ce point. Lorsque la vitesse est constante, le coefficient d'adhérence du pneu au point de contact roue/route s'exprime sous la forme :

$$\mu = \frac{F_x}{F_z}$$

Ainsi, ce coefficient correspond au rapport entre, d'une part, les effets moteurs ou les forces pouvant être transmises entre le pneumatique et la chaussée au point de contact et, d'autre part, la force normale exercée par le pneumatique sur la chaussée.

Le taux de glissement longitudinal du véhicule, quant à lui, correspond à la différence des vitesses de la roue et du véhicule, normalisée par la plus grande des deux valeurs. Il s'exprime donc sous la forme :

$$\tau = \frac{r\omega - v}{\max(r\omega, v)}$$

Un taux de glissement égal à -1 signifie que la roue est bloquée. Lors d'un freinage normal sur une route non dégradée, le taux de glissement se situe entre 0 et -0,05. Lorsque l'état de la chaussée se dégrade, ce taux devient, par exemple, inférieur à -0,10 et la roue risque de se bloquer si la pression de freinage est maintenue. Si la roue se bloque, alors le véhicule devient instable, et il apparaît alors une perte de dirigeabilité, c'est à dire une perte de contrôle de la direction, qui peut s'avérer très dangereuse pour les occupants d'un véhicule.

Un système d'anti-blocage de roue comme le système ABS permet de réduire la pression de freinage lorsque le taux de glissement devient inférieur à -0,10 environ.

Dans la suite de la description, les termes suivants seront utilisés :

- l'adhérence mobilisable est le coefficient d'adhérence maximum qui peut être atteint avant que le véhicule ne soit déstabilisé,
- l'adhérence mobilisée est le coefficient d'adhérence effectif d'une roue de véhicule sur la chaussée à un instant donné,
- le caractère « hors ligne » d'un calcul ou d'une estimation est inverse du caractère « embarqué ». Un calcul embarqué est effectué dans un véhicule en temps réel, alors qu'un calcul hors ligne est effectué dans un système distinct, en amont de toute estimation effectuée dans le véhicule.

Il existe, dans l'état de la technique connu, différentes méthodes permettant de réaliser une estimation de l'adhérence maximale atteignable à bord d'un véhicule.

Parmi les méthodes les plus courantes on trouve, tout d'abord, des méthodes basées sur l'estimation de la pente à l'origine de la courbe du taux de glissement en fonction de l'adhérence. Ces méthodes font appel à un calcul hors ligne de la valeur de la pente de la courbe pour différents types de route, par exemple glace, neige, asphalte mouillé, asphalte sec. Ensuite, une estimation embarquée de cette pente permet de déterminer le type de route par comparaison avec les valeurs mesurées hors ligne.

De telles méthodes, bien que relativement efficaces, nécessitent de réaliser un grand nombre de tests préliminaires sur cette surface. En outre, les résultats obtenus par cette méthode dépendent fortement du type de pneus installés sur le véhicule considéré et de l'usure de ces pneus.

On connaît également des méthodes d'estimation basées sur des modèles de comportement créés expérimentalement ou théoriquement. Parmi les modèles connus on peut citer le modèle de Pacejka, le modèle de LuGre, le modèle d'interaction Vehicule-Route, dit modèle VRIM, ou encore le modèle Burckhardt. Ces modèles, bien que très intéressants dans le cadre de simulation en laboratoire, présentent de nombreux inconvénients dès qu'il s'agit d'effectuer des estimations réelles. En effet, les modèles de Pacejka et Burckhardt nécessitent l'estimation de nombreux paramètres hors ligne, et ces paramètres ne sont valables que pour une configuration donnée du véhicule. Ainsi, pour obtenir des résultats corrects en utilisant ces modèles, il est nécessaire d'effectuer un nombre très important de tests préalables, permettant de déterminer les paramètres des modèles pour toutes les configurations de « type de route »/« vitesse du véhicule »/« type de pneu » possible, ce qui n'est pas envisageable, notamment pour des raisons d'ergonomie, de coûts et de précision du procédé. Le modèle de Lugre nécessite un nombre plus restreint de paramètres, mais ils sont difficiles à déterminer, ce qui conduit à de mauvaises performances de ce modèle en temps réel. Le modèle VRIM, quant à lui, ne permet pas une estimation de l'adhérence directement, mais de l'effort longitudinal Fx. Il nécessite en outre, la connaissance du couple de la roue qui est mesurable difficilement, ou avec des capteurs complexes, peu fiables et coûteux, qu'il est donc difficile d'embarquer dans un véhicule de série.

Enfin, on connaît également une méthode consistant à caractériser l'adhérence en fonction d'un instant de déclenchement d'un système anti-blocage installé dans le véhicule, dit système ABS.

Un système ABS vise à stopper une pression de freinage appliquée sur une roue lorsque l'accélération de cette dernière atteint une certaine valeur seuil, déterminée au préalable. L'objectif d'une telle action est d'éviter tout blocage de la roue lors d'une action de freinage, blocage qui entraîne généralement une perte de dirigeabilité, mettant ainsi en péril la sécurité des utilisateurs du véhicule.

Ainsi, connaissant la vitesse du véhicule et l'instant de déclenchement du système ABS, il est possible de déterminer par raisonnement inverse la valeur de l'adhérence. Toutefois, cette information arrive tardivement, à savoir lorsque la roue part en blocage

L'invention vise à proposer un procédé d'estimation permettant de remédier à tout ou partie des inconvénients cités précédemment, notamment un procédé permettant d'effectuer une estimation de l'adhérence dans un véhicule, le plus tôt possible, et sans qu'il soit nécessaire installer de nouveaux capteurs dans les véhicules automobiles.

- Ainsi, invention concerne un procédé d'estimation d'adhérence dans un véhicule automobile, conformément à l'objet de la revendication 1.

Selon une caractéristique de l'invention, les données prédéterminées sont, par exemple, issues de tests effectuées au préalable en laboratoire ou en conditions réelles, pour différents types de véhicule et dans différentes conditions de roulage.

L'objectif de la présente invention est, comme précédemment mentionné, de fournir un procédé qui permette d'effectuer une estimation, en temps réel, de l'adhérence mobilisée à bord du véhicule. En conséquence, les caractéristiques variables d'un véhicule mis en oeuvre dans ce procédé, telles que la vitesse de rotation d'une roue du véhicule, ou la vitesse longitudinale du véhicule, sont généralement déterminables à bord d'un véhicule de série de manière relativement aisée.

Toutefois, dans certaines configurations de l'invention, certaines de ces variables sont déterminées en dehors du véhicule, par exemple par des éléments d'une infrastructure routière tels que des radars.

Dans une réalisation, le procédé comprend en outre les étapes suivantes, pour déterminer une adhérence maximale pouvant être atteinte dans le véhicule, dite adhérence mobilisable :

- on détermine le positionnement des accélérations longitudinale et périphérique déterminées par rapport à un axe définissant la frontière entre une zone d'adhérence et une zone de non adhérence entre la roue et la chaussée au niveau du point de contact, et
- si les accélérations se situent dans la zone d'adhérence, on détermine que la valeur de l'adhérence mobilisable est supérieure à celle de l'adhérence mobilisée précédemment déterminée.
- si les accélérations se situent dans la zone de non adhérence, on détermine que la valeur de l'adhérence mobilisable est égale à celle de l'adhérence mobilisée précédemment déterminée.

Les zones d'adhérence et de non adhérence seront ultérieurement décrites en détail à l'aide de figures.

Dans une réalisation, la détermination de l'accélération longitudinale du véhicule est effectuée par calcul à partir d'une vitesse longitudinale du véhicule mesurée. Ce calcul est, par exemple, une dérivation numérique.

Dans une réalisation, toutes les déterminations d'accélérations et/ou vitesses nécessaires à la mise en oeuvre du procédé sont effectuées par des moyens installés dans le véhicule. Cette configuration permet d'effectuer une détermination de l'adhérence de manière entièrement embarquée dans le véhicule, et donc effectuée de manière complètement autonome, sans que le véhicule n'ait besoin de communiquer ni d'échanger des informations avec des systèmes extérieurs.

Dans ce cas, les mesures longitudinales sont, par exemple, effectuées par un accéléromètre. Les mesures périphériques sur les roues, quant à elles, sont par exemple effectuées en utilisant un tachymètre.

Au contraire, dans une autre réalisation, l'accélération longitudinale est déterminée hors du véhicule, à partir de mesures effectuées par un dispositif externe au véhicule. Un dispositif externe est, par exemple, un radar installé sur le bord d'une route, capable de mesurer la vitesse d'un véhicule passant devant lui.

Dans une autre réalisation encore, les accélération et/ou vitesse longitudinales sont déterminées en utilisant des données de position, issues d'un système de positionnement par satellite. Dans ce cas, la détermination peut être effectuée aussi bien dans que hors du véhicule.

Dans une réalisation, la détermination de l'accélération périphérique d'une roue est effectuée par calcul, à partir d'une vitesse de rotation de la roue et/ou d'une position angulaire de la roue.

Dans le cas des mesures de vitesse des roues, dans certaines configurations, on effectue les mesures sur deux ou plusieurs roues, et on utilise la plus petite pour la mise en oeuvre du procédé.

Dans une réalisation, le procédé comprend l'étape préliminaire d'enregistrer dans un calculateur destiné à la mise en oeuvre du procédé les données permettant de déterminer l'adhérence mobilisée dans le véhicule, et de définir les zones d'adhérence, de non adhérence, et l'axe frontière séparant ces deux zones.

Ces données sont, par exemple, enregistrées sous forme d'abaques, ou sous forme de tableaux.

L'invention concerne également un système d'estimation d'adhérence dans un véhicule automobile, comprenant :

- des moyens pour déterminer l'accélération longitudinale du véhicule,
- des moyens pour déterminer l'accélération périphérique d'une roue du véhicule,
- un calculateur comportant une mémoire dans laquelle sont enregistrées des données représentant, pour différentes valeurs d'adhérence, l'évolution de l'accélération longitudinale d'un véhicule en fonction de l'accélération périphériques d'une roue de ce véhicule, et
- des moyens pour déterminer, à partir de ces données et des accélérations longitudinale et périphérique, une adhérence effectivement mobilisée dans le véhicule.

Dans une réalisation, le système présente une ou plusieurs des caractéristiques suivantes :

- les moyens de détermination de l'accélération longitudinale comportent des moyens pour déterminer une vitesse longitudinale du véhicule, et pour calculer l'accélération à partir de cette vitesse,
- les moyens de détermination de l'accélération périphérique d'une roue comportent des moyens pour déterminer une vitesse angulaire ou une position angulaire de cette roue, et pour calculer l'accélération à partir de cette vitesse et/ou position, par exemple par dérivation numérique,

- des données permettant de définir les zones d'adhérence et de non adhérence du véhicule, ainsi que l'axe frontière séparant ces deux zones sont également enregistrées dans la mémoire du calculateur, par exemple sous forme d'abaques ou de tableaux.

Dans une autre réalisation, le système comprend en outre des moyens pour déterminer, à partir de l'estimation de l'adhérence, une régulation à appliquer à un système piloté présent dans le véhicule.

D'autres avantages et caractéristiques de invention apparaîtront avec la description de certains de ses modes de réalisation particuliers, cette description étant effectuée à titre non limitatif à l'aide de figures sur lesquelles :

- la figure 1, déjà décrite, représente les différentes forces mécaniques s'appliquant sur une roue d'un véhicule, et
- la figure 2 représente un graphe de variation des accélérations périphériques et longitudinales sur un véhicule tel que celui utilisé dans la mise en oeuvre d'un procédé objet de l'invention, graphe permettant de mettre en évidence un axe frontière déterminant deux zones d'adhérence et de non adhérence du véhicule.

La description est également effectuée à l'aide du tableau I, présent dans le texte ci-dessous.

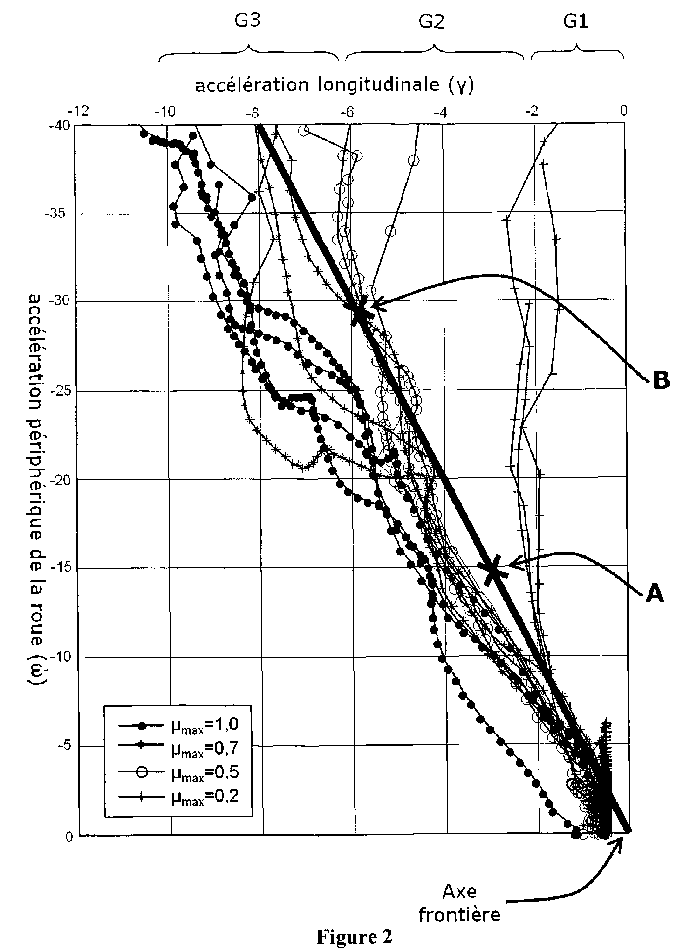

Sur la figure 2 sont représentées des courbes de variation des accélérations périphériques et longitudinales d'un véhicule, pour différents types de surface. Les surfaces testées, et les courbes qui en sont issues, peuvent être regroupées en fonction de leur adhérence, selon qu'elle est :

- très faible, par exemple proche de 0.2 pour le groupe G1,
- faible, par exemple proche de 0.5 pour le groupe G2, ou
- moyenne, par exemple proche de 0.7 ou de 1.0 pour le groupe G3.

Ces courbes sont déterminées de manière empirique, par des tests effectués en laboratoire ou en conditions réelles.

A partir de ces courbes, il est possible, comme montré sur cette figure, de faire apparaître un axe frontière. Ainsi que précédemment mentionné, l'axe frontière correspond à la définition de deux zones :

- l'une, située en dessous de l'axe frontière sur la figure 2, correspond à une zone d'adhérence, à l'intérieur de laquelle les accélérations sont telles qu'il y a adhérence entre la roue et la chaussée au niveau du point de contact,
- l'autre, située au dessus de l'axe frontière sur la figure 2, correspond à une zone de non adhérence, à l'intérieur de laquelle les accélérations sont telles qu'il y a pas d'adhérence entre la roue et la chaussée au niveau du point de contact.

Dans la suite de la description, la première zone sera nommée « zone de détermination de l'adhérence mobilisée », et la seconde zone sera nommée « zone de détermination de l'adhérence mobilisable ».

D'après cette définition de l'axe frontière, il apparaît que, si les accélérations d'un véhicule sont situées dans la zone de détermination de l'adhérence mobilisable, cela signifie que le véhicule est en perte de frottement. On peut alors en conclure que, lorsque, au cours d'une phase de roulement, les accélérations sortent de la zone de détermination de l'adhérence mobilisée, cela signifie que l'adhérence mobilisée tend vers sa valeur maximale. En conséquence, l'état du véhicule correspondant au passage de la zone de détermination de l'adhérence mobilisée à la zone de l'adhérence mobilisable permet de déterminer la valeur maximale de l'adhérence mobilisée dans un véhicule, qui correspond à l'adhérence mobilisable.

En revanche, lorsqu'un point représentatif de l'état d'un véhicule est situé à l'intérieur de la zone de détermination de la zone mobilisée, cela signifie que le véhicule est toujours dans une phase d'adhérence, et donc que l'adhérence mobilisée est inférieure à l'adhérence mobilisable dans le véhicule.

A partir du tracé de l'axe frontière tel que montré sur la figure 2, on détermine que cet axe est une droite d'équation $y = 0.2\dot{\omega}$. La détermination de cette équation de droite permet ensuite, par calcul, de déterminer si un point est situé au-dessus de cette droite, c'est-à-dire dans la zone de détermination de l'adhérence mobilisable, ou en dessous, à savoir dans la zone de détermination de l'adhérence mobilisée.

Sur la figure 2, on peut faire apparaître deux points caractéristiques A et B sur l'axe frontière. Le point A est le point limite à partir duquel les courbes correspondant à une adhérence très faible franchissent l'axe frontière, et le point B est le point limite à partir duquel les courbes correspondant à une adhérence faible franchissent l'axe frontière.

On précise ici que, dans toute la description, le terme accélération est employé au sens absolu, et peut donc également représenter une décélération, c'est à dire une accélération négative.

On constate sur la figure 2 que, lorsque les accélérations du véhicule et des roues se trouvent au dessus de l'axe frontière, au-dessus du point A, cela signifie que l'adhérence de référence est une adhérence très faible, de valeur 0.2.

De manière similaire, lorsque les accélérations du véhicule et des roues se trouvent au dessus de l'axe frontière au-dessus du point B dans la zone de détermination de l'adhérence mobilisable, cela signifie que l'adhérence a une valeur faible, telle que 0.5 dans cet exemple.

A partir de ces courbes et de la mise en évidence des deux points caractéristiques, il est possible de représenter sous forme d'un tableau les critères de détermination de la valeur d'adhérence mobilisable, dans le cadre de la mise en oeuvre d'un procédé selon l'invention.

Dans le tableau ci-dessous :

- y représente la valeur de l'accélération longitudinale du véhicule, montrée en ordonnée sur la figure 2,
- $\dot{\omega}$ représente la valeur de l'accélération périphérique d'une roue du véhicule, montrée en abscisse sur la figure 2,
- $\mu_{max}$ représente l'adhérence mobilisable dans le véhicule, déterminée grâce au procédé de l'invention.

Tableau I

| | $\gamma \geq -3$ (accélération au dessus du point A) | $-3 > \gamma \geq -6$ (accélération au dessus du point B) |
|---|---|---|
| $\gamma \geq 0.2\dot{\omega}$ (point au dessus de l'axe) | $\mu_{max} = 0.2$ | $\mu_{max} = 0.5$ |
| $\gamma < 0.2\dot{\omega}$ (point en dessous de l'axe) | $\mu_{max} > 0.2$ | $\mu_{max} > 0.5$ |

Les données contenues dans ce tableau sont, par exemple, enregistrées dans une mémoire d'un calculateur électronique installé dans le véhicule.

Les étapes du procédé de détermination sont alors les suivantes, dans le cas où on considère uniquement une roue du véhicule:

- on mesure avec un tachymètre installé sur la roue du véhicule la vitesse de rotation de cette roue,
- on mesure, avec un accéléromètre, l'accélération longitudinale y du véhicule,
- on transmet ces deux mesures à un calculateur numérique destiné à la mise en oeuvre du procédé,
- on effectue, dans le calculateur, une dérivation numérique permettant d'obtenir la valeur $\dot{\omega}$ de l'accélération périphérique à partir de la vitesse de rotation mesurée,
- à partir de l'accélération périphérique $\dot{\omega}$ et de l'accélération longitudinale y, on détermine les données correspondantes dans le tableau, qui permettent d'obtenir soit une valeur exacte de l'adhérence mobilisable, soit une valeur minimale de l'adhérence mobilisable.

La différence entre les deux lignes du tableau s'explique de la façon suivante :

- dans la première ligne, les accélérations du véhicule sont situées au dessus de l'axe frontière : dans ce cas, l'adhérence mobilisée dans le véhicule est supérieure à l'adhérence mobilisable, et le véhicule est en perte de frottement. Dès lors, en fonction des courbes tracées sur la figure 1, il est possible de déterminer la valeur de l'adhérence mobilisable. En effet, selon la valeur de l'accélération longitudinale mesurée, on détermine dans quel groupe de courbes (G1, G2 ou G3) se situe l'adhérence du véhicule.
- en revanche, dans la seconde ligne du tableau, les accélérations du véhicule sont situées en dessous de l'axe frontière. Cela signifie que l'adhérence mobilisée est inférieure à l'adhérence mobilisable, qui n'a donc pas été atteinte. En conséquence, il n'est pas possible de déterminer la valeur exacte de cette adhérence mobilisable, mais il possible d'en déterminer une valeur plancher. Cette détermination d'une valeur minimale est représentée par les expressions mathématiques $\mu_{max} > 0.2$ et $\mu_{max} > 0.5$.

Un procédé selon l'invention est mis en oeuvre par un calculateur électronique installé sur le véhicule. De manière avantageuse, le calculateur choisi sera le calculateur du frein. En effet, les mesures à effectuer pour la mise en oeuvre du présent procédé sont généralement déjà effectuées et transmises, au moins en partie, à un calculateur de frein sur les véhicules classiques munis de systèmes de contrôle de stabilité, tel que l'ESP, ou les systèmes anti-blocage des roues, tels que le système ABS.

Toutefois, il est possible de mettre en oeuvre ce procédé par le biais d'un autre calculateur, par exemple un calculateur spécifiquement dédié à l'estimation d'adhérence. Une telle réalisation est, par exemple, envisageable dans le cas où la vitesse et l'accélération ne sont pas déterminées par des capteurs implantés au niveau des roues.

Ainsi, de manière générale, l'invention propose un procédé permettant de fournir une estimation de l'adhérence mobilisable. L'estimation est fournie bien avant le blocage d'une roue et avec une bonne précision, puisque les valeurs utilisées lors du déroulement du procédé sont directement mesurées sur le véhicule, en temps réel. En outre, l'installation du système permettant la mise en oeuvre de ce procédé représente un moindre coût puisqu'il met en oeuvre, en partie, des éléments déjà présents dans les véhicules de série actuels.

Dans une réalisation, l'adhérence déterminée par ce procédé est communiquée à un conducteur du véhicule, afin qu'il puisse en tenir compte pour adapter sa conduite. Ainsi, par exemple, un conducteur peut être informé du fait qu'il approche de l'adhérence maximale, et en conséquence qu'il doit être précautionneux lors de l'utilisation du frein et garder une distance de sécurité suffisante par rapport au véhicule qui le précède.

Une telle information, déterminée bien avant le début de blocage des roues, est un complément très utile aux systèmes pilotés présents dans le véhicule, tels que le frein, la direction, la suspension, le moteur, ou encore la boîte de vitesse, et permet ainsi d'améliorer la sécurité du véhicule lors de freinage ou d'accélération.

De manière générale, connaître l'adhérence mobilisable ou mobilisée dans un véhicule permet de déterminer une régulation à appliquer à un système piloté présent dans le véhicule, tel que, par exemple, un système de frein, la direction, les suspensions, une boîte de vitesses, ou encore le moteur.

Ainsi, par exemple, connaître au plus tôt l'adhérence mobilisable ou mobilisée permet :

- de réduire l'augmentation de la pression de freinage afin d'éviter d'arriver en situation de début de blocage de roue
- d'agir sur les suspensions lorsqu'elles sont actives, par exemple pour augmenter la charge verticale et augmenter ainsi l'adhérence mobilisable
- d'agir sur la direction : en effet, pendant une phase d'accélération ou de freinage d'un véhicule, un changement de direction trop rapide peut conduire à un blocage rapide d'une ou plusieurs roues du véhicule,
- d'agir sur les boîtes de vitesses, si elles sont robotisées, afin de débrayer et d'éviter un calage moteur lors d'un freinage, ou limiter le passage du coupe moteur en accélération,
- d'agir sur le moteur afin d'éviter le calage moteur ou réduire le couple moteur.

Il est également possible de mettre en oeuvre ce procédé dans un dispositif extérieur au véhicule. En effet, un tel procédé peut être utile, par exemple, sur une infrastructure routière, pour transmettre à un véhicule une information sur les conditions de roulage en fonction de l'adhérence relevée par un véhicule précédent. Ainsi, le dispositif externe reçoit certaines informations d'un premier véhicule, en mesure certaines autres, et à partir de cela détermine une adhérence mobilisée par ce premier véhicule, à un endroit donné d'une infrastructure routière.

## Revendications

1. Procédé d'estimation d'adhérence dans un véhicule automobile, comprenant les étapes suivantes :

   - on détermine l'accélération longitudinale du véhicule,
   - on détermine, l'accélération périphérique d'une roue du véhicule,
   - à partir de données prédéterminées représentant pour différentes valeurs d'adhérence, l'évolution de l'accélération longitudinale d'un véhicule en fonction de l'accélération périphérique d'une roue de ce véhicule, on détermine la valeur d'adhérence mobilisée dans le véhicule, correspondant aux accélérations longitudinales et périphériques déterminées.

2. Procédé selon la revendication 1 comprenant en outre les étapes suivantes, pour déterminer une adhérence maximale pouvant être atteinte, dite adhérence mobilisable dans le véhicule :

   - on détermine le positionnement des accélérations longitudinale et périphérique déterminées par rapport à un axe définissant la frontière entre une zone d'adhérence et une zone de non adhérence entre la roue et la chaussée au niveau du point de contact, et
   - si les accélérations sont dans la zone d'adhérence, on détermine que la valeur de l'adhérence mobilisable est supérieure à celle de l'adhérence mobilisée précédemment déterminée.
   - si les accélérations sont dans la zone de non adhérence, on détermine que la valeur de l'adhérence mobilisable est égale à celle de l'adhérence mobilisée précédemment déterminée.

3. Procédé selon la revendication 1 ou 2, dans lequel, la détermination de l'accélération longitudinale du véhicule est effectuée par calcul à partir d'une vitesse longitudinale du véhicule mesurée.

**4.** Procédé selon la revendication 3, dans lequel l'ensemble les déterminations d'accélérations et/ou vitesse sont toutes effectuées par des moyens installés dans le véhicule.

**5.** Procédé selon la revendication 3, dans lequel l'accélération longitudinale est déterminée hors du véhicule, à partir de mesures effectuées par un dispositif externe au véhicule.

**6.** Procédé selon l'une des revendications précédentes, dans lequel la détermination de l'accélération périphérique d'une roue est effectuée par calcul, à partir d'une vitesse de rotation de la roue et/ou d'une position angulaire de la roue.

**7.** Procédé selon l'une des revendications 2 à 6 comprenant l'étape préliminaire d'enregistrer dans un calculateur destiné à la mise en oeuvre du procédé les données permettant de déterminer l'adhérence mobilisée dans le véhicule, et de définir les zones d'adhérence, de non adhérence, et l'axe frontière séparant ces deux zones.

**8.** Système d'estimation d'adhérence dans un véhicule automobile, comprenant :

- des moyens pour déterminer l'accélération longitudinale du véhicule,
- des moyens pour déterminer l'accélération périphérique d'une roue du véhicule,
- un calculateur comportant une mémoire dans laquelle sont enregistrées des données représentant, pour différentes valeurs d'adhérence, l'évolution de l'accélération longitudinale d'un véhicule en fonction de l'accélération périphériques d'une roue de ce véhicule, et
- des moyens pour déterminer, à partir de ces données et des accélérations longitudinale et périphérique, une adhérence effectivement mobilisée dans le véhicule.

**9.** Système selon la revendication 8, comprenant en outre des moyens pour déterminer, à partir de l'estimation de l'adhérence, une régulation à appliquer à un système piloté présent dans le véhicule.

## Claims

**1.** A method for estimating adherence in a motor vehicle, comprising the following stages:

- the longitudinal acceleration of the vehicle is determined,
- the peripheral acceleration of a wheel of the vehicle is determined,
- from predetermined data representing for different adherence values the evolution of the longitudinal acceleration of a vehicle as a function of the peripheral acceleration of a wheel of this vehicle, the adherence value mobilized in the vehicle is determined, corresponding to the determined longitudinal and peripheral accelerations.

**2.** The method according to Claim 1, further comprising the following stages, for determining a maximum adherence being able to be reached, known as the mobilizable adherence in the vehicle:

- the positioning of the longitudinal and peripheral accelerations are determined, determined with respect to an axis defining the boundary between an adherence zone and a non-adherence zone between the wheel and the roadway at the level of the point of contact, and
- if the accelerations are in the adherence zone, it is determined that the mobilizable adherence value is greater than that of the previously determined mobilized adherence.
- if the accelerations are in the non-adherence zone, it is determined that the mobilizable adherence value is equal to that of the previously determined mobilized adherence.

**3.** The method according to Claim 1 or 2, in which the determination of the longitudinal acceleration of the vehicle is carried out by calculation from a measured longitudinal speed of the vehicle.

**4.** The method according to Claim 3, in which the whole of the determinations of accelerations and/or speed are all carried out by means installed in the vehicle.

**5.** The method according to Claim 3, in which the longitudinal acceleration is determined outside the vehicle, from measures carried out by a device external to the vehicle.

**6.** The method according to one of the preceding claims, in which the determination of the peripheral acceleration of a wheel is carried out by calculation, from a rotation speed of the wheel and/or an angular position of the wheel.

**7.** The method according to one of Claims 2 to 6, comprising the preliminary stage of recording in a computer intended to implement the method the data permitting the mobilized adherence to be determined in the vehicle, and defining the adherence zones, non-adherence zones, and the barrier axis separating these two zones.

**8.** A system for estimating adherence in a motor vehicle, comprising:

- means for determining the longitudinal acceleration of the vehicle,
- means for determining the peripheral acceleration of a wheel of the vehicle,
- a computer comprising a memory in which data are recorded representing, for different adherence values, the evolution of the longitudinal acceleration of a vehicle as a function of the peripheral acceleration of a wheel of this vehicle, and
- means for determining, from these data and the longitudinal and peripheral accelerations, an effectively mobilized adherence in the vehicle.

**9.** The system according to Claim 8, further comprising means for determining, from the estimation of the adherence, a regulation to apply to a driven system present in the vehicle.

**Patentansprüche**

**1.** Verfahren zum Schätzen von Haftung in einem Kraftfahrzeug, das die folgenden Schritte aufweist:

- Bestimmen der Längsbeschleunigung des Fahrzeugs,
- Bestimmen der Umfangsbeschleunigung eines Rads des Fahrzeugs,
- ausgehend von den vorbestimmten Daten, die für verschiedene Haftungswerte die Entwicklung der Längsbeschleunigung eines Fahrzeugs in Abhängigkeit von der Umfangsbeschleunigung eines Rads dieses Fahrzeugs darstellen, Bestimmen des in dem Fahrzeug mobilisierten Haftungswerts, der den bestimmten Längs- und Umfangsbeschleunigungen entspricht.

**2.** Verfahren nach Anspruch 1, das ferner die folgenden Schritte aufweist, um eine maximale Haftung, die erreicht werden kann, in dem Fahrzeug mobilisierbare Haftung genannt, zu bestimmen:

- Bestimmen der Positionierung der bestimmten Längsbeschleunigung und Umfangsbeschleunigung in Bezug zu einer Achse, die die Grenze zwischen einem Haftungsbereich und einem Nichthaftungsbereich zwischen dem Rad und der Fahrbahn auf dem Niveau des Kontaktpunkts definiert, und
- wenn die Beschleunigungen in diesem Haftungsbereich liegen, Bestimmen, dass der Wert der mobilisierbaren Haftung größer ist als der der zuvor bestimmten mobilisierbaren Haftung.
- wenn die Beschleunigungen in dem Nichthaftungsbereich liegen, Bestimmen, dass der Wert der mobilisierbaren Haftung gleich dem der zuvor bestimmten mobilisierbaren Haftung ist.

**3.** Verfahren nach Anspruch 1 oder 2, bei dem das Bestimmen der Längsbeschleunigung des Fahrzeugs rechnerisch ausgehend von einer gemessenen Längsgeschwindigkeit erfolgt.

**4.** Verfahren nach Anspruch 3, bei dem alle Beschleunigungs- und/oder Geschwindigkeitsbestimmungen durch Mittel, die in dem Fahrzeug installiert sind, ausgeführt werden.

**5.** Verfahren nach Anspruch 3, bei dem die Längsbeschleunigung außerhalb des Fahrzeugs ausgehend von Messungen bestimmt wird, die von einer Vorrichtung außerhalb des Fahrzeugs ausgeführt werden.

**6.** Verfahren nach einem der vorhergehenden Ansprüche, bei dem die Bestimmung der Umfangsbeschleunigung eines Rads rechnerisch ausgehend von einer Drehzahl des Rads und/oder einer Winkelposition des Rads ausgeführt wird.

**7.** Verfahren nach einem der Ansprüche 2 bis 6, das den vorausgehenden Schritt des Aufzeichnens in einem Rechner, der zur Umsetzung des Verfahrens bestimmt ist, der Daten aufweist, die es erlauben, die in dem Fahrzeug mobilisierte Haftung zu bestimmen und die Bereiche der Haftung, der Nichthaftung und die Grenzachse, die diese zwei Bereiche trennt, zu definieren.

8. System zum Schätzen der Haftung in einem Kraftfahrzeug, Folgendes aufweisend:

- Mittel zum Bestimmen der Längsbeschleunigung des Fahrzeugs,
- Mittel zum Bestimmen der Umfangsbeschleunigung eines Rads des Fahrzeugs,
- einen Rechner, der einen Speicher aufweist, in dem Daten aufgezeichnet sind, die für verschiedene Haftungswerte die Entwicklung der Längsbeschleunigung eines Fahrzeugs in Abhängigkeit von der Umfangsbeschleunigung eines Rads dieses Fahrzeugs darstellen, und
- Mittel, um ausgehend von diesen Daten und diesen Längs- und Umfangsbeschleunigungen eine effektiv in dem Fahrzeug mobilisierte Haftung zu bestimmen.

9. System nach Anspruch 8, das ferner Mittel aufweist, um ausgehend von der Schätzung der Haftung eine Regulierung zu bestimmen, die an ein in dem Fahrzeug vorhandenes gesteuertes System anzuwenden ist.

**Figure 1**

**Figure 2**

EP 2 082 939 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002105297 A